# EUROPEAN PATENT SPECIFICATION

(11) **EP 1 705 211 B1**
(45) Date of publication and mention of the grant of the patent: **05.06.2013**
(21) Application number: 06251544.0
(22) Date of filing: 23.03.2006
(51) Int. Cl.: C08J 5/04, C08K 7/06, C08L 21/00

(54) **Carbon nanofibre composite material**
Kohlenstoffnanofaser-Verbundmaterial
Matière composite comprenant des nanofibres de carbone

(30) Priority: 23.03.2005 JP 2005084504; 01.07.2005 JP 2005194029; 23.02.2006 JP 2006047102
(43) Date of publication of application: 27.09.2006
(73) Proprietor: Nissin Kogyo Co., Ltd., Ueda-shi Nagano 386-8505 (JP)
(72) Inventor: Noguchi, Toru, Nissin Kogyo Co., Ltd., Ueda-shi, Nagano 386-8505 (JP); Magario, Akira, Nissin Kogyo Co., Ltd., Ueda-shi, Nagano 386-8505 (JP)
(74) Representative: O'Connell, David Christopher

(56) References cited:
- EP-A- 1 466 940
- EP-A2- 1 500 677
- JP-A- 2005 023 419
- JP-A- 2005 068 309
- JP-A- 2005 068 386

## Description

### BACKGROUND OF THE INVENTION

The present invention relates to a carbon fiber composite material.

A composite material is generally provided with physical properties corresponding to the application by combining a matrix material and reinforcing fibers or reinforcing particles. In particular, a reduction in effects due to thermal expansion of parts has been demanded in the fields of semiconductor manufacturing equipment, optical equipment, and microprocessing equipment. To deal with this demand, composite materials using various reinforcing fibers (e.g. carbon fibers) have been proposed (e.g. WO 00/64668).

However, it is difficult to provide thermal expansion isotropy to a composite material using fibers in comparison with a composite material using particles. Therefore, the application is limited to a sheet or plate form, or it is necessary to form a three-dimensional structure such as biaxial or triaxial weave using fibers. The coefficient of linear expansion of an elastomer changes to a large extent at different temperatures. In particular, since an elastomer thermally deteriorates at a relatively low temperature due to molecular chain scission, the coefficient of linear expansion rapidly increases in the vicinity of that temperature (temperature at which thermal deterioration occurs is hereinafter called "heat resistant temperature"). Therefore, a composite material using an elastomer matrix and exhibiting a stable low coefficient of linear expansion over a wide temperature range has not been proposed.

The inventors of the invention have proposed a carbon fiber composite material in which carbon nanofibers are uniformly dispersed (e.g. JP-A-2005-68386). In this carbon fiber composite material, the dispersibility of the carbon nanofibers which exhibit high aggregating properties is improved by mixing the elastomer and the carbon nanofibers.

EP-A-1466940 discloses a carbon fiber composite material comprising an elastomer and a carbon nanofiber dispersed in the elastomer, the elastomer having an unsaturated bond or a group that has affinity to the carbon nanofiber. However, the use of the carbon nanofibers employed in the present invention is not disclosed or suggested.

### SUMMARY

According to the invention, there is provided a carbon fiber composite material comprising:
an elastomer; and
15 to 50 vol% of carbon nanofibers dispersed in the elastomer,
the elastomer including an unsaturated bond or a group exhibiting affinity to the carbon nanofibers,
the carbon nanofibers having an average diameter of 0.7 to 15 nm and an average length of 0.5 to 100 micrometers, and
the carbon fiber composite material having an average distance between the adjacent carbon nanofibers of 100 nm or less in an arbitrary plane, and
wherein, when a standard deviation of the distance between the adjacent carbon nanofibers is represented by sigma, 3 sigma is 190 nm or less, and
wherein the carbon nanofibers have an aspect ratio of 50 or more, and
wherein the elastomer has a molecular weight of 5,000 to 5,000,000.

The carbon fiber composite material can have an average coefficient of linear expansion of 100 ppm/K or less and a differential coefficient of linear expansion of less than 120 ppm/K at -80 to +300°C.

The carbon fiber composite material can have a ratio of a coefficient of linear expansion in an arbitrary direction X and a coefficient of linear expansion in a direction Y which intersects the direction X at right angles of 0.7 to 1.3 at -80 to +300°C.

### BRIEF DESCRIPTION OF THE SEVERAL VIEWS OF THE DRAWING

FIG. 1 is a diagram schematically illustrating a method of mixing an elastomer and carbon nanofibers by utilizing an open-roll method according to one embodiment of the invention.
FIG. 2 is a graph of "temperature - differential coefficient of linear expansion" of Example 2 and Comparative Example 2.
FIG. 3 is a graph of "temperature - differential coefficient of linear expansion" of Examples 1, 2, and 9 and Comparative Example 1.
FIG. 4 is a histogram of measurement results for the distance between adjacent carbon nanofibers of Examples 1 and 2 and Comparative Example 1.

### DETAILED DESCRIPTION OF THE EMBODIMENT

The invention provides a carbon fiber composite material in which carbon nanofibers are uniformly dispersed and which shows only a small amount of thermal expansion over a wide temperature range.

According to one embodiment of the invention, there is provided a carbon fiber composite material comprising:
an elastomer; and
15 to 50 vol% of carbon nanofibers dispersed in the elastomer,
the elastomer including an unsaturated bond or a group exhibiting affinity to the carbon nanofibers,
the carbon nanofibcrs having an average diameter of 0.7 to 15 nm and an average length of 0.5 to 100 micrometers, and
the carbon fiber composite material having an average distance between the adjacent carbon nanofibers of 100 nm or less in an arbitrary plane.

According to this carbon fiber composite material, the average distance between the adjacent carbon nanofibers can be adjusted to 100 nm or less by reinforcing the carbon fiber composite material using extremely thin carbon nanofibers in an amount as large as 15 to 50 vol%. If the average distance between the adjacent carbon nanofibers is 100 nm or less, the carbon fiber composite material has a stable coefficient of linear expansion over a wide temperature range. In the carbon fiber composite material, a rapid increase in coefficient of linear expansion due to thermal deterioration does not occur at -80 to + 300°C.

In this carbon fiber composite material, when a standard deviation of the distance between the adjacent carbon nanofibers is represented by sigma, 3 sigma is 190 nm or les. The carbon nanofibers have an aspect ratio of 50 or more. The elastomer has a molecular weight of 5,000 to 5,000,000.

According to one embodiment of the invention, the carbon fiber composite material: may have an average coefficient of linear expansion of 100 ppm/K or less and a differential coefficient of linear expansion of less than 120 ppm/K at -80 to +300°C.

According to this carbon fiber composite material, since the carbon fiber composite material has a stable coefficient of linear expansion over a wide temperature range by reinforcing the carbon fiber composite material using a large amount of extremely thin carbon nanofibers, the carbon fiber composite material may be used in combination with a material having a low coefficient of linear expansion such as a metal or a ceramic. In particular, since the carbon fiber composite material can be used over a wide temperature range in comparison with a known elastomer, a product can be easily designed by combining the carbon fiber composite material with a material having a low coefficient of linear expansion.

Moreover, since the unsaturated bond or group of the elastomer is bonded to an active site of the carbon nanofiber, particularly to a terminal radical of the carbon nanofiber, the aggregating force of the carbon nanofibers can be reduced, whereby the dispersibility of the carbon nanofibers can be increased. In the resulting carbon fiber composite material, the carbon nanofibers are uniformly dispersed in the elastomer as a matrix.

According to one embodiment of the invention, the carbon fiber composite material may have a ratio of a coefficient of linear expansion in an arbitrary direction X and a coefficient of linear expansion in a direction Y which intersects the direction X at right angles of 0.7 to 1.3 at -80 to +300°C.

According to this carbon fiber composite material, the coefficient of linear expansion shows isotropy (particularly in three-dimensional directions) while using a fibrous filler material (reinforcing material) by reinforcing the carbon fiber composite material using a large amount of extremely thin carbon nanofibers. Therefore, the carbon fiber composite material can be used not only in the form of a sheet or plate, but also in various other forms.

The carbon fiber composite material according to these embodiments of the invention may be in an uncrosslinked form or a crosslinked form. Since the elastomer as the matrix is reinforced by a large amount of carbon nanofibers, a carbon fiber composite material having a stable low coefficient of linear expansion over a wide temperature range can be obtained irrespective of whether the carbon fiber composite material is in an uncrosslinked form or a crosslinked form.

The carbon fiber composite material according to these embodiments of the invention may have a heat resistant temperature of 300°C or more. A carbon fiber composite material having a heat resistant temperature as high as 300°C or more can be utilized for parts used at a high temperature.

The elastomer according to these embodiments of the invention may be a rubber elastomer or a thermoplastic elastomer. When using a rubber elastomer, the elastomer may be in a crosslinked form or an uncrosslinked form. As the raw material elastomer, an elastomer in an uncrosslinked form is used when using a rubber elastomer.

The embodiments of the invention are described below in detail with reference to the drawings.

The carbon fiber composite material according to the embodiments of the invention may be obtained by a method including dispersing carbon nanofibers in an elastomer by applying a shear force.

The elastomer preferably has characteristics such as a certain degree of molecular length and flexibility in addition to high affinity to the carbon nanofibers. In the step of dispersing the carbon nanofibers in the elastomer by applying a shear force, it is preferable that the carbon nanofibers and the elastomer be mixed by applying as high a shear force as possible.

### (1) Elastomer

The elastomer has a molecular weight of 5,000 to 5,000,000, and still more preferably 20,000 to 3,000,000. If the molecular weight of the elastomer is within this range, since the elastomer molecules are entangled and linked, the elastomer exhibits an elasticity suitable for dispersing the carbon nanofibers. Since the elastomer is viscous, the elastomer can easily enter the space between the aggregated carbon nanofibers. Moreover, the elastomer allows the carbon nanofibers to be separated due to the elasticity. If the molecular weight of the elastomer is less than 5,000, since the elastomer molecules cannot be sufficiently entangled, the effect of dispersing the carbon nanofibers is reduced due to low elasticity, even if a shear force is applied in the subsequent step. If the molecular weight of the elastomer is greater than 5,000,000, the elastomer becomes too hard, whereby the processing becomes difficult.

The network component of the elastomer in an uncrosslinked form has a spin-spin relaxation time (T2n/30°C), measured at 30°C by a Hahn-echo method using a pulsed nuclear magnetic resonance (NMR) technique, of preferably 100 to 3,000 microseconds, and still more preferably 200 to 1,000 microseconds. If the elastomer has a spin-spin relaxation time (T2n/30°C) within the above range, the elastomer is flexible and has a sufficiently high molecular mobility. That is, the elastomer exhibits an elasticity suitable for dispersing the carbon nanofibers. Since the elastomer is viscous, the elastomer can easily enter the space between the carbon nanofibers due to high molecular mobility when mixing the elastomer and the carbon nanofibcrs. If the spin-spin relaxation time (T2n/30°C) is shorter than 100 microseconds, the elastomer cannot have a sufficient molecular mobility. If the spin-spin relaxation time (T2n/30°C) is longer than 3,000 microseconds, since the elastomer tends to flow as a liquid and exhibits low elasticity, it becomes difficult to disperse the carbon nanofibcrs.

The network component of the clastomer in a crosslinked form preferably has a spin-spin relaxation time (T2n) measured at 30°C by the Hahn-echo method using the pulsed NMR technique of 100 to 2,000 microseconds. The reasons therefor are the same as those described for the uncrosslinked form. Specifically, when crosslinking an uncrosslinked form which satisfies the above conditions, the spin-spin relaxation time (T2n) of the resulting crosslinked form almost falls within the above range.

The spin-spin relaxation time obtained by the Hahn-echo method using the pulsed NMR technique is a measure which indicates the molecular mobility of a substance. In more detail, when measuring the spin-spin relaxation time of the elastomer by the Hahn-echo method using the pulsed NMR technique, a first component having a shorter first spin-spin relaxation time (T2n) and a second component having a longer second spin-spin relaxation time (T2nn) are detected. The first component corresponds to the network component (backbone molecule) of the polymer, and the second component corresponds to the non-network component (branched component such as terminal chain) of the polymer. The shorter the first spin-spin relaxation time, the lower the molecular mobility and the harder the elastomer. The longer the first spin-spin relaxation time, the higher the molecular mobility and the softer the elastomer.

As the measurement method usihng the pulsed NMR technique, a solid-echo method, a Carr-Purcell-Meiboom-Gill (CPMG) method, or a 90-degree pulse method may be applied instead of the Hahn-echo method. However, since the elastomer in the embodiments of the invention has a medium spin-spin relaxation time (T2), the Hahn-echo method is most suitable. In general, the solid-echo method and the 90-degrec pulse method are suitable for measuring a short spin-spin relaxation time (T2), the Hahn-echo method is suitable for measuring a medium spin-spin relaxation time (T2), and the CPMG method is suitable for measuring a long spin-spin relaxation time (T2).

At least one of the main chain, side chain, and terminal chain of the elastomer includes an unsaturated bond or a group exhibiting affinity to a terminal radical of the carbon nanofiber, or the elastomer has properties of readily producing such a radical or group. The unsaturated bond or group may be at least one unsaturated bond or group selected from a double bond, a triple bond, and functional groups such as alpha-hydrogen, a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group.

The carbon nanofiber generally has a structure in which the side surface is formed of a six-membered ring of carbon atoms and the end is closed by introduction of a five-membered ring. Since the carbon nanofiber has a forced structure, a defect tends to occur, whereby a radical or a functional group tends to be formed at the defect. In the embodiments of the invention, since at least one of the main chain, side chain, and terminal chain of the elastomer includes an unsaturated bond or a group exhibiting high affinity (reactivity or polarity) to the radical of the carbon nanofiber, the elastomer and the carbon nanofiber can be bonded. This enables the carbon nanofibers to be easily dispersed by overcoming the aggregating force of the carbon nanofibers. When mixing the elastomer and the carbon nanofibers, free radicals produced by breakage of the elastomer molecules attack the defects of the carbon nanofibers to produce free radicals on the surfaces of the carbon nanofibers.

As the elastomer, an elastomer such as natural rubber (NR), epoxidized natural rubber (ENR), styrene-butadiene rubber (SBR), nitrile rubber (NBR), chloroprene rubber (CR), ethylene propylcnc rubber (EPR or EPDM), butyl rubber (ITR), chlorobutyl rubber (CIIR), acrylic rubber (ACM), silicone rubber (Q), fluorine rubber (FKM), butadiene rubber (BR), epoxidized butadiene rubber (EBR), epichlorohydrin rubber (CO or CEO), urethane rubber (U), or polysulfide rubber (T); a thermoplastic elastomer such as an olefin-based elastomer (TPO), poly(vinyl chloride)-based elastomer (TPVC), polyester-based elastomer (TPEE), polyurethane-based elastomer (TPU), polyamide-based elastomer (TPEA), or styrene-based elastomer (SBS); or a mixture of these elastomers may be used. In particular, a highly polar elastomer which readily produces free radicals during mixing of the elastomer, such as natural rubber (NR) or nitrile rubber (NBR), is preferable. An elastomer having a low polarity, such as ethylene propylene rubber (EPDM), may also be used in the embodiments of the invention, since such an elastomer also produces free radicals when the mixing temperature is set at a relatively high temperature (e.g. 50 to 150°C for EPDM).

The elastomer according to the embodiments of the invention may be a rubber elastomer or a thermoplastic elastomer. When using a rubber elastomer, an uncrosslinked elastomer is preferably used.

### (II) Carbon Nanofiber

The carbon nanofibers have an average diameter of 0.7 to 15 nm and an average length of 0.5 to 100 micrometers. If the average diameter of the carbon nanofibers is less than 0.7 nm, the carbon nanofibers tend to be damaged during mixing. If the average diameter is greater than 15 nm, the reinforcement effect is insufficient. In particular, the carbon nanofibers may not exhibit an elastomer confinement effect when the average diameter is greater than 15 nm. The confinement effect is described later. If the average length of the carbon nanofibers is less than 0.5 micrometers, the reinforcement effect is insufficient. If the average length is greater than 100 micrometers, it becomes difficult to mix the carbon nanofibers.

The carbon nanofiber has an aspect ratio of 50 or more, and more preferably 100 to 20,000. If the aspect ratio is less than 50, the effect of confining the elastomer achieved when using particles may not be obtained, whereby the carbon fiber composite material may flow or be thermally deteriorated at 300°C or less, for example.

The carbon nanofiber content of the carbon fiber composite material is 15 to 50 vol%. If the carbon nanofiber content is less than 15 vol%, the carbon nanofibers may not exhibit the elastomer confinement effect. If the carbon nanofiber content is greater than 50 vol%, it becomes difficult to mix the carbon nanofibers.

A stable low coefficient of linear expansion can be obtained over a wide temperature range by reinforcing the elastomer using a large amount of extremely thin carbon nanofibers.

As examples of the carbon nanofiber, a carbon nanotube and the like can be given. The carbon nanotube has a single-wall structure in which a graphene sheet of a hexagonal carbon layer is closed in the shape of a cylinder, or a multi-wall structure in which the cylindrical structures are nested. Specifically, the carbon nanotube may be formed only of the single-wall structure or the multi-wall structure, or may have the single-wall structure and the multi-wall structure in combination. A carbon material having a partial carbon nanotube structure may also be used. The carbon nanotube may be called a graphite fibril nanotube.

A single-wall carbon nanotube or a multi-wall carbon nanotube is produced with a desired size by using an arc discharge method, a laser ablation method, a vapor-phase growth method, or the like.

In the arc discharge method, an arc is discharged between electrode materials made of carbon rods in an argon or hydrogen atmosphere at a pressure slightly lower than atmospheric pressure to obtain a multi-wall carbon nanotube deposited on the cathode. When a catalyst such as nickel/cobalt is mixed into the carbon rod and an arc is discharged, a single-wall carbon nanotube is obtained from soot adhering to the inner side surface of a processing vessel.

In the laser ablation method, a target carbon surface into which a catalyst such as nickel/cobalt is mixed is irradiated with strong pulsed laser light from a YAG laser in a noble gas (e.g. argon) to melt and vaporize the carbon surface to obtain a single-wall carbon nanotube.

In the vapor-phase growth method, a carbon nanotube is synthesized by thermally decomposing hydrocarbons such as benzene or toluene in a vapor phase. As specific examples of the vapor-phase growth method, a floating catalyst method, a zeolite-supported catalyst method, and the like can be given.

The carbon nanofibers may be provided with improved adhesion to and wettability with the elastomer by subjecting the carbon nanofibers to a surface treatment such as an ion-injection treatment, sputter-etching treatment, or plasma treatment before mixing the carbon nanofibers into the elastomer.

### (III) Dispersing carbon nanofibers in elastomer by applying shear force

This step may be carried out by using an open-roll method, an internal mixing method, a multi-screw extrusion kneading method, or the like.

In the embodiments of the invention, an example using an open-roll method with a roll distance of 0.5 mm or less is described as the step of dispersing the carbon nanofibers in the elastomer by applying a shear force.

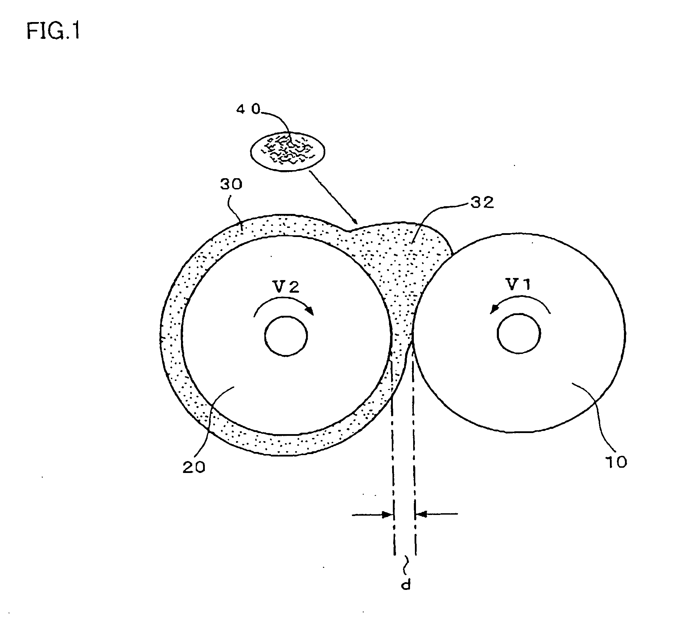

FIG. 1 is a diagram schematically showing the open-roll method using two rolls. In FIG. 1, a reference numeral 10 indicates a first roll, and a reference numeral 20 indicates a second roll. The first roll 10 and the second roll 20 are disposed at a predetermined distance of d (e.g. 1.5 mm). The first and second rolls are rotated normally or reversely. In the example shown in FIG. 1, the first roll 10 and the second roll 20 are rotated in the directions indicated by the arrows.

When an elastomer 30 is wound around the second roll 20 while rotating the first and second rolls 10 and 20, a bank 32 of the elastomer is formed between the rolls 10 and 20. After the addition of carbon nanofibers 40 to the bank 32, the first and second rolls 10 and 20 are rotated to obtain a mixture of the elastomer and the carbon nanofibers. The mixture is then removed from the open rolls. After setting the distance d between the first roll 10 and the second roll 20 at preferably 0.5 mm or less, and still more preferably 0.1 to 0.5 mm, the mixture of the elastomer and the carbon nanofibers is supplied to the open rolls and tight-milled. Tight milling is preferably performed about ten times, for example. When the surface velocity of the first roll 10 is indicated by V1 and the surface velocity of the second roll 20 is indicated by V2, the surface velocity ratio (V1/V2) of the first roll 10 to the second roll 20 during tight milling is preferably 1.05 to 3.00, and still more preferably 1.05 to 1.2. A desired shear force can be obtained by using such a surface velocity ratio.

This causes a high shear force to be applied to the elastomer 30 so that the aggregated carbon nanofibers 40 are separated in such a manner that the carbon nanofibers arc removed one by one by the elastomer molecules and are dispersed in the elastomer 30.

In this step, the elastomer and the carbon nanofibers are mixed at a relatively low temperature of preferably 0 to 50°C, and still more preferably 5 to 30°C in order to obtain as high a shear force as possible. When using EPDM as the elastomer, it is preferable to perform two-stage mixing steps. In the first mixing step, EPDM and the carbon nanofibers are mixed at a first temperature which is 50 to 100°C lower than the temperature in the second mixing step in order to obtain as high a shear force as possible. The first temperature is preferably 0 to 50°C, and still more preferably 5 to 30°C. A second temperature of the rolls is set at a relatively high temperature of 50 to 150°C so that the dispersibility of the carbon nanofibers can be improved.

In this step, free radicals are produced in the elastomer shorn by the shear force and attack the surfaces of the carbon nanofibers, whereby the surfaces of the carbon nanofibers are activated. When using natural rubber (NR) as the elastomer, the natural rubber (NR) molecule is cut while being mixed using the rolls to have a molecular weight lower than the molecular weight before being supplied to the open rolls. Since radicals are produced in the cut natural rubber (NR) molecules and attack the surfaces of the carbon nanofibers during mixing, the surfaces of the carbon nanofibers are activated.

Since the elastomer according to the embodiments of the invention has the above-described characteristics including the elasticity indicated by the molecular configuration (molecular length) and the molecular motion, viscosity, and chemical interaction with the carbon nanofibers, the carbon nanofibers are easily dispersed. Therefore, a carbon fiber composite material exhibiting excellent carbon fiber dispersibility and dispersion stability (dispersed carbon fibers rarely reaggregate) can be obtained. In more detail, when mixing the elastomer and the carbon nanofibers, the viscous elastomer enters the space between the carbon nanofibers, and a specific portion of the elastomer is bonded to a highly active site of the carbon nanofiber through chemical interaction. When a high shear force is applied to the mixture of the elastomer having an appropriately long molecular length and a high molecular mobility (elasticity) and the carbon nanofibers, the carbon nanofibers move along with deformation of the elastomer. Moreover, the aggregated carbon nanofibcrs are separated by the restoring force of the elastic elastomer after application of the shear force, and arc dispersed in the elastomer. According to the embodiments of the invention, when the mixture is extruded through a narrow space between the rolls, the mixture is deformed to have a thickness greater than the roll distance due to the restoring force of the elastic elastomer. The deformation causes the mixture to which a high shear force is applied to flow more complexly, thereby dispersing the carbon nanofibers in the elastomer. The dispersed carbon nanofibers are prevented from reaggregating due to the chemical interaction with the elastomer, whereby excellent dispersion stability can be obtained.

The carbon nanofibers can be uniformly dispersed in the elastomer by incorporating the carbon nanofibers in the carbon fiber composite material in an amount of 15 vol% or more. This may be confirmed by measuring the distance between the adjacent carbon nanofibers dispersed in the carbon fiber composite material in an arbitrary plane and confirming whether or not the distances show a normal distribution, for example.

In this step, the above-mentioned internal mixing method or multi-screw extrusion kneading method may also be used instead of the open-roll method. In other words, it suffices that a shear force sufficient to separate the aggregated carbon nanofibers and to cut the elastomer molecules to produce radicals be applied to the elastomer.

After the above-described step of dispersing the carbon nanofibers in the elastomer, an extrusion step, a molding step, a crosslinking step, and the like may be performed by a known method

In the step of dispersing the carbon nanofibers in the elastomer, or in the subsequent step, a compounding ingredient usually used in the processing of an elastomer such as rubber may be added. As the compounding ingredient, a known compounding ingredient may be used. As examples of the compounding ingredient, a crosslinking agent, vulcanizing agent, vulcanization accelerator, vulcanization retarder, softener, plasticizer, curing agent, reinforcing agent, filler, aging preventive, colorant, and the like can be given.

### (IV) Carbon fiber composite material obtained by (III)

A carbon fiber composite material according to the embodiments of the invention includes an elastomer and 15 to 50 vol % of carbon nanofibers dispersed in the elastomer, the carbon fiber composite material having an average distance between the adjacent carbon nanofibers of 100 nm or less in an arbitrary plane.

The carbon fiber composite material including thin carbon nanofibcrs having an average diameter of 0.7 to 15 nm in an amount as large as 15 to 50 vol% has an average distance between the adjacent carbon nanofibers of 100 nm or less in an arbitrary plane. The average distance between the adjacent carbon nanofibers may be determined by photographing the tensile fracture plane of the carbon fiber composite material using an electron microscope (SEM), measuring the center-to-center distance between the adjacent carbon nanofibers at a number of points (e.g. 200 points) in the fracture plane, and calculating the average value of the center-to-center distances. In the carbon fiber composite material, the distances between the adjacent carbon nanofibers thus measured approximately show a normal distribution. When the standard deviation of the distance between the adjacent carbon nanofibers is represented by sigma, 3 sigma may be 190 nm or less.

When measuring the coefficient of linear expansion of the carbon fiber composite material at -80 to +300°C while changing the carbon nanofiber content, a phenomenon in which the differential coefficient of linear expansion rapidly increases (carbon fiber composite material shows chain-scission thermal deterioration) is not observed when the carbon nanofiber content is 15 vol% or more.

It is estimated that such a change in coefficient of linear expansion is caused by the elastomer confinement effect of the carbon nanofibers. When the distance between the adjacent carbon nanofibers is 100 nm or less, the area in which the elastomer is surrounded by the carbon nanofibers is significantly reduced. This means that the elastomer is divided (nano-divided) by the carbon nanofibers into portions having a nanometer size. When the elastomer is nano-divided by the carbon nanofibers, the nano-divided elastomer is confined in a small area by the carbon nanofibers, whereby the movement (flow) of the elastomer is prevented. Therefore, the small areas into which the elastomer is nano-divided by the carbon nanofibers exhibit a stable coefficient of linear expansion over a wide temperature range (e.g. -80 to +300°C) due to the confinement effect. If the average distance between the adjacent carbon nanofibers in the carbon fiber composite material exceeds 100 nm, a rapid increase in the differential coefficient of linear expansion may be observed in the vicinity of 0°C, whereby the carbon fiber composite material may show chain-scission thermal deterioration.

A carbon fiber composite material according to the embodiments of the invention includes an elastomer and 15 to 50 vol% of carbon nanofibers dispersed in the elastomer, the carbon fiber composite material having an average coefficient of linear expansion of 100 ppm/K or less and a differential coefficient of linear expansion of less than 120 ppm/K at -80 to + 300°C.

The average coefficient of linear expansion of the carbon fiber composite material varies depending on the carbon nanofiber content. The average coefficient of linear expansion decreases as the carbon nanofiber content increases, and the average coefficient of linear expansion increases as the carbon nanofiber content decreases. Specifically, the average coefficient of linear expansion of the carbon fiber composite material can be controlled by adjusting the carbon nanofiber content. If the carbon nanofiber content is less than 15 vol%, the average coefficient of linear expansion exceeds 100 ppm/K when the average diameter of the carbon nanofibers is 15 nm.

Since the carbon fiber composite material has a small differential coefficient of linear expansion of less than 120 ppm/K, the carbon fiber composite material is stable over a wide temperature range and does not show an instantaneous increase in thermal expansion. The maximum value of the differential coefficient of linear expansion of the carbon fiber composite material varies depending on the carbon nanofiber content. The maximum value decreases as the carbon nanofiber content increases, and the maximum value increases as the carbon nanofiber content decreases. In particular, the maximum value of the differential coefficient of linear expansion exceeds 120 ppm/K when the carbon nanofiber content is less than 15 vol%. As a result, the differential coefficient of linear expansion varies to a large extent at -80 to +300°C, whereby the thermal expansion becomes unstable in a specific temperature range.

A carbon fiber composite material according to the embodiments of the invention has a ratio of a coefficient of linear expansion in an arbitrary direction X and a coefficient of linear expansion in a direction Y which intersects the direction X at right angles of 0.7 to 1.3 at -80 to +300°C.

When the arbitrary direction X is the open roll rotation direction, fibers arc generally oriented so that the coefficient of linear expansion in the direction Y which intersects the direction X at right angles becomes extremely small (anisotropy). However, the coefficient of linear expansion of the carbon fiber composite material in the embodiments of the invention shows isotropy.

The carbon fiber composite material may be an uncrosslinked form or a crosslinked form. The form of the carbon fiber composite material may be appropriately selected depending on the application.

The carbon fiber composite material in the embodiments of the invention is not thermally deteriorated at -80 to +300°C (i.e. the carbon fiber composite material has a heat resistant temperature of 300°C or more). Occurrence of thermal deterioration may be determined by a rapid increase in the coefficient of linear expansion which occurs when cutting of the molecular chain of the elastomer of the carbon fiber composite material is started.

In the carbon fiber composite material according to the embodiments of the invention, the carbon nanofibers are uniformly dispersed in the elastomer as the matrix. In other words, the elastomer is restrained by the carbon nanofibers. The mobility of the elastomer molecules restrained by the carbon nanofibers is low in comparison with the case where the elastomer molecules are not restrained by the carbon nanofibers. Therefore, the first spin-spin relaxation time (T2n), the second spin-spin relaxation time (T2nn), and the spin-lattice relaxation time (T1) of the carbon fiber composite material according to the embodiments of the invention are shorter than those of the elastomer which does not contain the carbon nanofibers.

When the elastomer molecules are restrained by the carbon nanofibers, the number of non-network components (non-reticulate chain components) is considered to be decreased for the following reasons. Specifically, since the number of non-network components which cannot easily move is increased when the molecular mobility of the entire elastomer is decreased by the carbon nanofibers, the non-network components tend to behave in the same manner as the network components. Moreover, since the non-network components (terminal chains) easily move, the non-network components tend to be adsorbed on the active sites of the carbon nanofibers. It is considered that these phenomena decrease the number of non-network components. Therefore, the fraction (fnn) of components having the second spin-spin relaxation time is smaller than that of the elastomer which docs not contain the carbon nanofibers.

Therefore, the carbon fiber composite material according to the embodiments of the invention preferably has values measured by the Hahn-echo method using the pulsed NMR technique within the following range.

Specifically, it is preferable that, in the uncrosslinked carbon fiber composite material, the first spin-spin relaxation time (T2n) measured at 150°C be 100 to 3,000 microseconds, the second spin-spin relaxation time (T2nn) measured at 150°C be 1,000 to 10,000 microseconds, and the fraction (fnn) of components having the second spin-spin relaxation time be less than 0.2.

It is preferable that, in the crosslinked carbon fiber composite material, the first spin-spin relaxation time (T2n) measured at 150°C be 100 to 3,000 microseconds, the second spin-spin relaxation time (T2nn) measured at 150°C be absent or 1,000 to 5,000 microseconds, and the fraction (fnn) of components having the second spin-spin relaxation time be less than 0.2.

The spin-lattice relaxation time (T1) measured by the inversion-recovery method using the pulsed NMR technique is the measure indicating the molecular mobility of a substance together with the spin-spin relaxation time (T2). In more detail, the shorter the spin-lattice relaxation time of the elastomer, the lower the molecular mobility and the harder the elastomer. The longer the spin-lattice relaxation time of the elastomer, the higher the molecular mobility and the softer the elastomer. Therefore, the carbon fiber composite material in which the carbon nanofibers are uniformly dispersed shows a low molecular mobility and has values of T2n, T2nn, and fnn within the above range.

The carbon fiber composite material according to the embodiments of the invention preferably has a flow temperature, determined by temperature dependence measurement of dynamic viscoelasticity, 20°C or more higher than the flow temperature of the raw material elastomer. In the carbon fiber composite material of the embodiments of the invention, the carbon nanofibers are uniformly dispersed in the elastomer. In other words, the elastomer is restrained by the carbon nanofibers as described above. In this state, the elastomer exhibits a molecular motion smaller than that of the elastomer which does not contain the carbon nanofibers, whereby the flowability is decreased. The carbon fiber composite material having such flow temperature characteristics shows a small temperature dependence of dynamic viscoelasticity to exhibit excellent heat resistance.

The carbon fiber composite material according to the embodiments of the invention exhibits stable thermal expansion characteristics over a wide temperature range, as described above. Moreover, since the carbon fiber composite material has a small average coefficient of linear expansion, the amount of thermal expansion is small over a wide temperature range. Since the carbon fiber composite material has a small maximum value of the differential coefficient of linear expansion, the carbon fiber composite material is stable over a wide temperature range and does not show an instantaneous increase in thermal expansion.

Although examples according to the embodiments of the invention are described below, the invention is not limited to the following examples.

### Examples 1 to 9 and Comparative Examples 1 to 3

### (1) Preparation of sample

A predetermined amount of carbon nanofibers was mixed into an elastomer shown in Table 1 using the open-roll method to prepare samples. As the samples, an uncrosslinked sample and a crosslinked sample were prepared by the following method.

### (a) Preparation of uncrosslinked sample

1) A predetermined amount (vol%) of an elastomer shown in Table 1 was supplied to six-inch open rolls (roll temperature: 10 to 20°C) and wound around the roll.
2) Carbon nanofibers ("CNT1" or "CNT13" in Table 1) or carbon black ("HAF" or "SRF" in Table 1) were added to the elastomer in an amount (vol %) shown in Table 1. The roll distance was set at 1.5 mm.
3) After the addition of the carbon nanofibers, the mixture of the elastomer and the carbon nanofibers was removed from the rolls.
4) After reducing the roll distance from 1.5 mm to 0.3 mm, the mixture was supplied to the rolls and tight-milled. The surface velocity ratio of the rolls was set at 1.1. Tight milling was repeatedly performed ten times.
5) After setting the rolls at a predetermined distance (1.1 mm), the mixture subjected to tight milling was supplied to the rolls and sheeted.

Uncrosslinked samples of Examples 1 to 9 and Comparative Examples 1 to 3 were thus obtained. In Table 1, "NR" indicates natural rubber, "SBR" indicates styrene-butadiene rubber, "EPDM" indicates ethylene-propylene rubber, "NBR" indicates nitrile rubber, and "TPE" indicates an epoxy group-containing styrene-butadiene block copolymer. In Table 1, "CNT1" indicates a single-wall carbon nanotubes having an average diameter (fiber diameter) of about 1 nm, "CNT13" indicates a multi-wall carbon nanotubes having an average diameter of about 13 nm, "HAF'" indicates HAF-HS grade carbon black, and ''SRF" indicates SRF grade carbon black. In Examples 1 to 7 and Comparative Examples 1 to 3, 2 parts by weight of a peroxide ("PO") was added as a crosslinking agent before adding the carbon nanofibers or the carbon black.

### (b) Preparation of crosslinked sample

The uncrosslinked samples of Examples 1 to 7 and Comparative Examples 1 to 3 cut into a die size were placed in a die and subjected to press-crosslinking at 175°C and 100 kgf/cm² for 20 minutes to obtain crosslinked samples.

### (2) Measurement of coefficient of linear expansion and heat resistant temperature

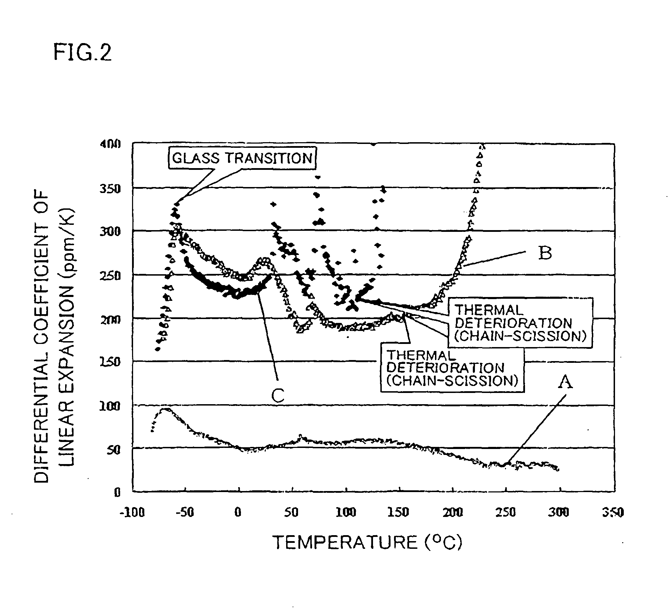

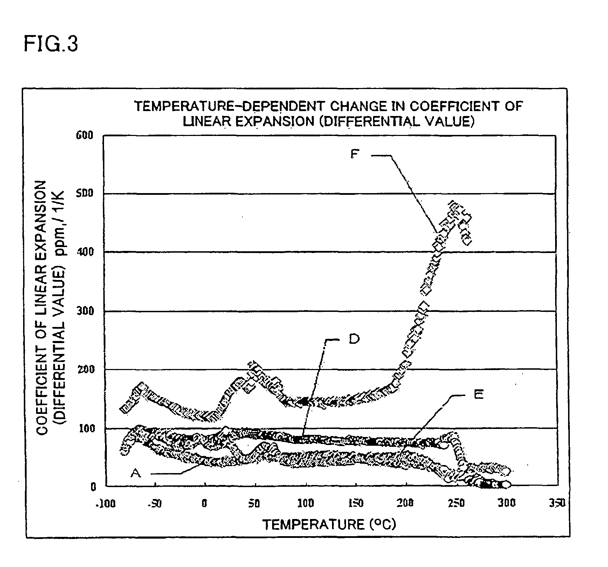

The coefficient of linear expansion and the heat resistant temperature were measured for the uncrosslinked and crosslinked samples of Examples 1 to 9 and Comparative Examples 1 to 3. The results are shown in Table 1. "TMASS" manufactured by SII was used as the measurement instrument. The measurement sample had dimensions of 1.5× 1.0× 10 mm. The measurement load was 25 KPa, the measurement temperature was -80 to +350°C, and the temperature increase rate was 2°C/min. FIG 2 is a graph of "temperature (°C) - differential coefficient of linear expansion (ppm/K)" showing temperature-dependent changes in the differential coefficient of linear expansion of Example 2 ("A'' in FIG 2), Comparative Example 1 ("B" in FIG 2), and natural rubber ("C" in FIG 2). FIG 3 is a graph of "temperature (°C) - differential coefficient of linear expansion (ppm/K)" showing temperature-dependent changes in the differential coefficient of linear expansion of Example 1 ("D" in FIG. 3), Example 2 ("A" in FIG 3), Example 9 ("E" in FIG. 3), and Comparative Example 1 ("F" in FIG. 3).

### (3) Observation using electron microscope

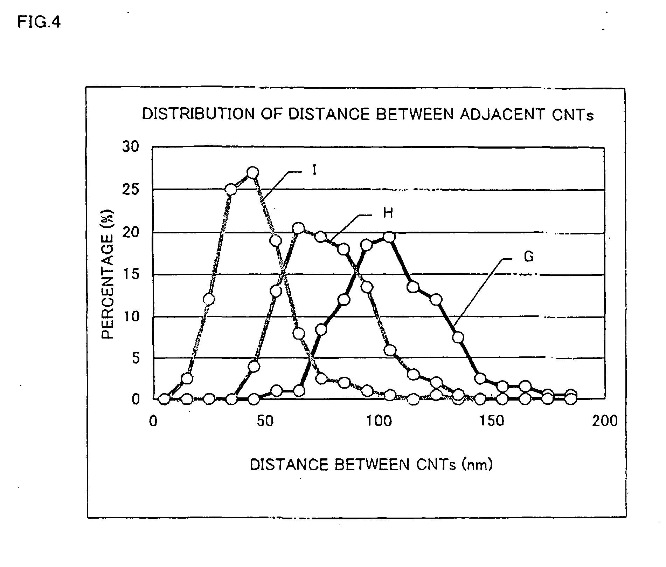

The tensile fracture planes of the uncrosslinked and crosslinked samples of Examples 1 to 9 and Comparative Examples 1 to 3 were observed using an electron microscope (SEM) to determine the dispersion state of the carbon nanofibers or the carbon black. As a result, the carbon nanofibers or the carbon black were found to be uniformly dispersed in the elastomer in all the samples. The tensile fracture plane of each sample was photographed using the electron microscope, and the center-to-center distance between the adjacent carbon nanofibers was measured at 200 points in the photograph. The average value of the measured distances and 3 sigma (sigma: standard deviation) were then calculated. The results are shown in Table 1. FIG 4 shows the measurement results for the distance between the adjacent carbon nanofibers of Example 1 ("I" in FIG 4), Example 2 ("H" in FIG. 4), and Comparative Example 1 ("G" in FIG. 4) as a histogram (distribution of distance between adjacent carbon nanofibers). In Table 1, the distance of Comparative Examples 2 and 3 indicates the center-to-center distance between the adjacent carbon black particles.

### (4) Low elongation stress test

The uncrosslinked and crosslinked samples of Examples 1 to 9 and Comparative Examples 1 to 3 having a width of 5 mm, a length of 50 mm, and a thickness of 1 mm were elongated at 10 mm/min to determine the stress at 10% deformation. The measurement was performed in a direction (L) parallel to the grain direction of each sample and a direction (T) perpendicular to the direction L. The low elongation stress ratio was calculated as shown by "stress in direction L / stress in direction T". The results are shown in Table 1.

**TABLE 1**

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Raw material elastomer | Type of elatomer | | NR | NR | NR | NR | SBR | EPDM | NBR | TPE | NR | NR | NR | NR |
| | Polar group | | Double bond | Double bond | Double bond | Double bond | Double bond | Double bond Norbornene | Double bond Nitrile group | Epoxy group | Double bond | Double bond | Double bond | Double bond |
| | Average molecular weight | | 3,000,000 | 3,000,000 | 3,000,000 | 3,000,000 | 150,000 | 200,000 | 200,00 | 100,000 | 3,000,000 | 3,000,000 | 3,000,000 | 3,000,000 |
| | Uncrosslinked form | T2n (30°C) (µsec) | 700 | 700 | 700 | 700 | 400 | 520 | 300 | 870 | 700 | 700 | 700 | 700 |
| | | T2n (150°C) | 5500 | 5500 | 5500 | 5500 | 2400 | 2200 | 22000 | - | 5500 | 5500 | 5500 | 5500 |
| | | T2 nn (150°C) (µsec) | 1800 | 18000 | 18000 | 18000 | 17000 | 16000 | 14000 | - | 18000 | 18000 | 18000 | 12000 |
| | | fon (150°C) (µsec) | 0.381 | 0.381 | 0.381 | 0.381 | 0.286 | 0.405 | 0.133 | - | 0.381 | 0.381 | 0.381 | 0.381 |
| | | Flow temperature (°C) | 40 | 40 | 40 | 40 | 35 | 55 | 75 | - | 40 | 40 | 40 | 40 |
| Carbon fiber composite material | Amount | Elastomer (vol %) | 85 | 80 | 50 | 85 | 80 | 80 | 80 | 80 | 80 | 90 | 80 | 80 |
| | | CNT13 (vol %) | is | 20 | 50 | 0 | 20 | 20 | 20 | 20 | 20 | 10 | 0 | 0 |
| | | CNT1 (vol %) | 0 | 0 | 0 | 15 | 0 | 0 | 0 | 0 | 0 | 0 | 0 | 0 |
| | | HAF(vol %) | 0 | 0 | 0 | 0 | 0 | 0 | 0 | 0 | 0 | 0 | 20 | 0 |
| | | SRF (vol %) | 0 | 0 | 0 | 0 | 0 | 0 | 0 | 0 | 0 | 0 | 0 | 20 |
| | | PO (phr) | 2 | 2 | 2 | 2 | 2 | 2 | 2 | 0 | 0 | 2 | 2 | 2 |
| | Heat resistant temperature (°C) | | 300 or more | 100 or more | 300 or more | 300 or more | 300 or more | 300 or more | 300 or more | 300 or more | 300 or more | 300 or more | 140 | 150 |
| | Maximum value of differential coefficient expansion (ppm/K) | | 98 | 83 | 35 | 67 | 91 | 92 | 73 | 96 | 96 | 480 | Not calculated | Not calculated |
| | Average coefficient of linear expansion (ppm/K) | | 73 | 45 | 8 | 25 | 42 | 38 | 26 | 12 | 49 | 192 | Not calculated | Not calculated |
| | Average distance between adjacent CNTs (nm) | | 78 | 46 | 15 | 9 | 55 | 62 | 42 | 32 | 44 | 107 | 80 | 110 |
| | 3s of distance between adjacent CNTs (nm) | | 54 | 48 | 12 | 8 | 62 | 71 | 33 | 27 | 132 | 42 | 165 | 200 |
| | Low elongation stress ratio | | 1.1 | 1.22 | 1.08 | 1.25 | 1.03 | 1.06 | 1.23 | 1.04 | 1.21 | 1.18 | 1.03 | 1.09 |

As is clear from FIGS. 2 and 3, it was confirmed that the samples of Examples 1, 2, and 9 were stable in the measurement temperature range due to a small differential coefficient of linear expansion in comparison with the natural rubber and the sample of Comparative Example 1. The natural rubber and the sample of Comparative Example 1 showed a large change in the differential coefficient of linear expansion at the glass transition temperature (Tg), the thermal deterioration start temperature (heat resistant temperature), and the like. In particular, the samples of Examples 1, 2, and 9 showed almost no increase in the differential coefficient of linear expansion. Therefore, it was found that an increase in the differential coefficient of linear expansion occurs to no or only a small extent when the content of the carbon nanofibers (CNT13) is 15 to 20 vol%. It was found that the uncrosslinked form also shows a stable differential coefficient of linear expansion, since the sample of Example 9 showed almost the same tendency as those of the samples of Examples 1 and 2.

As is clear from FIG 4, since the distances between the adjacent carbon nanofibers of Examples 1 and 2 showed an approximately normal distribution, it was confirmed that the carbon nanofibers were uniformly dispersed in the samples of Examples 1 and 2. It was also confirmed that the carbon nanofibcrs were almost uniformly dispersed in the sample of Comparative Example 1 without showing a highly biased distribution.

As is clear from Table 1, the following items were confirmed from Examples 1 to 9 according to the invention. Specifically, the carbon fiber composite materials of Examples 1 to 9 had an average coefficient of linear expansion of 100 ppm/K or less and a maximum value of the differential coefficient of linear expansion of less than 120 ppm/K at -80 to +300°C. The carbon fiber composite materials of Examples 1 to 9 and Comparative Example 1 (uncrosslinked and crosslinked samples) had a heat resistant temperature of 300°C or more. The carbon fiber composite material of Comparative Example 1 had an average coefficient of linear expansion of 192 ppm/K and a maximum value of the differential coefficient of linear expansion of 480 ppm/K. In Comparative Examples 2 and 3, the average coefficient of linear expansion and the maximum value of the differential coefficient of linear expansion were not calculated since the coefficient of linear expansion changed to a large extent at -80 to +300°C and the sample flowed. The heat resistant temperature of Comparative Examples 2 and 3 was respectively 140°C and 150°C. The low elongation stress ratios of the carbon fiber composite materials of Examples 1 to 9 show that the carbon fiber composite materials were isotropically reinforced in spite of the inclusion of the fibers (carbon nanofibers).

Therefore, it was found that the carbon fiber composite material according to the embodiments of the invention shows a small amount of thermal expansion and is stable over a wide temperature range.

Although only some embodiments of the invention have been described in detail above, those skilled in the art will readily appreciate that many modifications arc possible in the embodiments without departing from the novel teachings and advantages of this invention. Accordingly, all such modifications are intended to be included within the scope of this invention.

## Claims

1. A carbon fiber composite material comprising:
an elastomer; and
15 to 50 vol% of carbon nanofibers dispersed in the elastomer,
the elastomer including an unsaturated bond or a group exhibiting affinity to the carbon nanofibers,
the carbon nanofibers having an average diameter of 0.7 to 15 nm and an average length of 0.5 to 100 micrometers, and
the carbon fiber composite material having an average distance between the adjacent carbon nanofibers of 100 nm or less in an arbitrary plane, and
wherein, when a standard deviation of the distance between the adjacent carbon nanofibers is represented by sigma, 3 sigma is 190 nm or less, and
wherein the carbon nanofibers have an aspect ratio of 50 or more, and
wherein the elastomer has a molecular weight of 5,000 to 5,000,000.

2. The carbon fiber composite material of claim 1, wherein
the carbon fiber composite material has an average coefficient of linear expansion of 100 ppm/K or less and a differential coefficient of linear expansion of less than 120 ppm/K. at -80 to +300°C.

3. The carbon fiber composite material of claim 1, wherein
the carbon fiber composite material has a ratio of a coefficient of linear expansion in an arbitrary direction X and a coefficient of linear expansion in a direction Y which intersects the direction X at right angles of 0.7 to 1.3 at -80 to +300°C.

4. The carbon fiber composite material as defined in any one of claims 1 to 3, wherein the carbon fiber composite material is in an uncrosslinked form.

5. The carbon fiber composite material as defined in any one of claims 1 to 3, wherein the carbon fiber composite material is in a crosslinked form.

6. The carbon fiber composite material as defined in any one of claims 1 to 5, wherein at least one of a main chain, a side chain, and a terminal chain of the elastomer includes at least one of a double bond, a triple bond, alpha-hydrogen, a carbonyl group, a carboxyl group, a hydroxyl group, an amino group, a nitrile group, a ketone group, an amide group, an epoxy group, an ester group, a vinyl group, a halogen group, a urethane group, a biuret group, an allophanate group, and a urea group.

7. The carbon fiber composite material as defined in any one of claims 1 to 6, wherein a network component of the elastomer in an uncrosslinked form has a spin-spin relaxation time (T2n) measured at 30°C by a Hahn-echo method using a pulsed nuclear magnetic resonance (NMR) technique of 100 to 3,000 microseconds.

8. The carbon fiber composite material as defined in any one of claims 1 to 6, wherein a network component of the elastomer in a crosslinked form has a spin-spin relaxation time (T2n) measured at 30°C by a Hahn-echo method using a pulsed nuclear magnetic resonance (NMR) technique of 100 to 2,000 microseconds.

9. The carbon fiber composite material as defined in any one of claims 1 to 8, having a heat resistant temperature of 300°C or more.

## Patentansprüche

1. Kohlenstofffaser-Verbundwerkstoff, umfassend
ein Elastomer; und
15 bis 50 Vol.-% im Elastomer verteilte Kohlenstoffnanofasern,
wobei das Elastomer eine ungesättigte Bindung oder eine Gruppe, die eine Affinität für die Kohlenstoffnanofasern aufweist, enthält,
wobei die Kohlenstoffnanofasern einen durchschnittlichen Durchmesser von 0,7 bis 15 nm haben und eine durchschnittliche Länge von 0,5 bis 100 Mikrometer, und
wobei der Kohlenstofffaser-Verbundwerkstoff eine durchschnittliche Entfernung zwischen nebeneinander angeordneten Kohlenstoffnanofasern von 100 nm oder weniger in einer beliebigen Ebene hat, und
wobei, wird eine Standardabweichung der Entfernung zwischen nebeneinander angeordneten Kohlenstoffnanofasern durch Sigma dargestellt, 3 Sigma 190 nm oder weniger ist, und
wobei die Kohlenstoffnanofasern einen Formfaktor von 50 oder mehr haben, und
wobei das Elastomer ein Molekulargewicht von 5.000 bis 5.000.000 hat.

2. Kohlenstofffaser-Verbundwerkstoff gemäß Anspruch 1, wobei
der Kohlenstofffaser-Verbundwerkstoff einen durchschnittlichen linearen Ausdehnungskoeffizienten von 100 ppm/K oder geringer hat und einen differentialen linearen Ausdehnungskoeffizienten von geringer als 120 ppm/K bei -80 bis +300°C.

3. Kohlenstofffaser-Verbundwerkstoff gemäß Anspruch 1, wobei
der Kohlenstofffaser-Verbundwerkstoff ein Verhältnis zwischen einem linearen Ausdehnungskoeffizienten in einer beliebigen Richtung X und einem linearen Ausdehnungskoeffizienten in einer Richtung Y, welche die Richtung X in rechten Winkeln schneidet, von 0,7 bis 1,3 bei -80 bis +300°C hat.

4. Kohlenstofffaser-Verbundwerkstoff gemäß irgendeinem der Ansprüche 1 bis 3, wobei der Kohlenstofffaser-Verbundwerkstoff in einer nicht quervernetzten Form ist.

5. Kohlenstofffaser-Verbundwerkstoff gemäß irgendeinem der Ansprüche 1 bis 3, wobei der Kohlenstofffaser-Verbundwerkstoff in einer quervernetzten Form ist.

6. Kohlenstofffaser-Verbundwerkstoff gemäß irgendeinem der Ansprüche 1 bis 5, wobei mindestens eine aus einer Hauptkette, einer Nebenkette und einer endständigen Kette des Elastomers mindestens eines enthält aus einer Doppelbindung, einer Dreifachbindung, einem alpha-Wasserstoff, einer Carbonylgruppe, einer Carboxylgruppe, einer Hydroxylgruppe, einer Aminogruppe, einer Nitrilgruppe, einer Ketongruppe, einer Amidgruppe, einer Epoxygruppe, einer Estergruppe, einer Vinylgruppe, einer Halogengruppe, einer Urethangruppe, einer Biuretgruppe, einer Allophanatgruppe und einer Ureagruppe.

7. Kohlenstofffaser-Verbundwerkstoff gemäß irgendeinem der Ansprüche 1 bis 6, wobei eine Netzwerkkomponente des Elastomers in einer nicht quervernetzten Form eine Spin-Spin-Relaxationszeit (T2n), gemessen bei 30°C durch ein Hahn-Echo-Verfahren mit einer Puls-Kernmagnetresonanztechnik (NMR), von 100 bis 3.000 Mikrosekunden hat.

8. Kohlenstofffaser-Verbundwerkstoff gemäß irgendeinem der Ansprüche 1 bis 6, wobei eine Netzwerkkomponente des Elastomers in einer quervernetzten Form eine Spin-Spin-Relaxationszeit (T2n), gemessen bei 30°C durch ein Hahn-Echo-Verfahren mit einer Puls-Kernmagnetresonanztechnik (NMR), von 100 bis 2.000 Mikrosekunden hat.

9. Kohlenstofffaser-Verbundwerkstoff gemäß irgendeinem der Ansprüche 1 bis 8, mit einer Wärmefestigkeitstemperatur von 300°C oder mehr.

## Revendications

1. Un matériau composite en fibres de carbone comprenant :
un élastomère, et
15 à 50 vol% de nanofibres de carbone dispersées dans l'élastomère,
l'élastomère comprenant une liaison insaturée ou un groupe présentant une affinité aux nanofibres de carbone,
les nanofibres de carbone possédant un diamètre moyen de 0,7 à 15 nm et une longueur moyenne de 0,5 à 100 micromètres, et
le matériau composite en fibres de carbone possédant une distance moyenne entre les nanofibres de carbone adjacentes de 100 nm ou moins dans un plan arbitraire, et
où, lorsqu'un écart standard de la distance entre les nanofibres de carbone adjacentes est représenté par sigma, 3 sigma est 190 nm ou moins, et
où les nanofibres de carbone possèdent un rapport de forme de 50 ou plus, et
où l'élastomère possède un poids moléculaire de 5 000 à 5 000 000.

2. Le matériau composite en fibres de carbone selon la revendication 1, où
le matériau composite en fibres de carbone possède un coefficient moyen d'expansion linéaire de 100 ppm/K ou moins et un coefficient différentiel d'expansion linéaire de moins de 120 ppm/K à -80 à +300°C.

3. Le matériau composite en fibres de carbone selon la revendication 1, où
le matériau composite en fibres de carbone possède un rapport d'un coefficient d'expansion linéaire dans une direction arbitraire X et d'un coefficient d'expansion linéaire dans une direction Y qui intersecte la direction X à des angles droits de 0,7 à 1,3 à -80 à +300°C.

4. Le matériau composite en fibres de carbone selon l'une quelconque des revendications 1 à 3, où le matériau composite en fibres de carbone est dans une forme non réticulée.

5. Le matériau composite en fibres de carbone selon l'une quelconque des revendications 1 à 3, où le matériau composite en fibres de carbone est dans une forme réticulée.

6. Le matériau composite en fibres de carbone selon l'une quelconque des revendications 1 à 5, où au moins une chaîne parmi une chaîne principale, une chaîne latérale et une chaîne terminale de l'élastomère comprend au moins un élément parmi une liaison double, une liaison triple, alpha-hydrogène, un groupe carbonyle, un groupe carboxyle, un groupe hydroxyle, un groupe amino, un groupe nitrile, un groupe cétone, un groupe amide, un groupe époxy, un groupe ester, un groupe vinyle, un groupe halogène, un groupe uréthane, un groupe biuret, un groupe allophanate et un groupe urée.

7. Le matériau composite en fibres de carbone selon l'une quelconque des revendications 1 à 6, où un composant de réseau de l'élastomère dans une forme non réticulée possède un temps de relaxation spin-spin (T2n) mesuré à 30°C par un procédé d'écho de Hahn au moyen d'une technique de résonance magnétique nucléaire (NMR) pulsée de 100 à 3 000 microsecondes.

8. Le matériau composite en fibres de carbone selon l'une quelconque des revendications 1 à 6, où un composant de réseau de l'élastomère dans une forme réticulée possède un temps de relaxation spin-spin (T2n) mesuré à 30°C par un procédé d'écho de Hahn au moyen d'une technique de résonance magnétique nucléaire (NMR) pulsée de 100 à 2 000 microsecondes.

9. Le matériau composite en fibres de carbone selon l'une quelconque des revendications 1 à 8, possédant une température de résistance à la chaleur de 300°C ou plus.
